# EUROPÄISCHE PATENTANMELDUNG

(11) **EP 1 045 280 A1**
(43) Veröffentlichungstag der Anmeldung: **18.10.2000**
(21) Anmeldenummer: 00106485.6
(22) Anmeldetag: 25.03.2000
(51) Int. Cl.: G03B 27/58

(54) **Vorrichtung und Verfahren zum Belichten von lichtempfindlichem Material**

(30) Priorität: 15.04.1999 DE 19917103
(71) Anmelder: Agfa-Gevaert AG, 51373 Leverkusen (DE)
(72) Erfinder: Hebenstreit, Jörk, Dr., 07639 Bad Klosterlausnitz (DE)

(57) **Zusammenfassung**

Die Erfindung betrifft eine Vorrichtung zum Belichten von lichtempfindlichem Material. Das Gerät hat eine Belichtungseinrichtung (15), eine Belichtungsbühne (10), wenigstens ein Magazin (2) zum Aufbewahren einer Rolle lichtempfindlichen Materials, ein Transporteinrichtung (8) zum Transportieren des lichtempfindlichen Materials aus dem Magazin (2) zur Belichtungsbühne (10) und eine Schneideinrichtung (6) zum Schneiden des lichtempfindlichen Materials in Einzelblätter. Um eine größere Auswahl an lichtempfindlichem Material zum Belichten zur Verfügung stellen zu können, ist zusätzliche zum Rollenmagazin (2) eine Kassette (4) zum Aufbewahren von blattförmigem lichtempfindlichem Material im Gerät vorgesehen sowie eine Übergabeeinrichtung (11) zum Übergeben des blattförmigen Materials aus der Kassette (4) zur Transporteinrichtung (8) oder direkt zur Belichtungsbühne (10).

## Beschreibung

Die Erfindung betrifft eine Vorrichtung sowie ein Verfahren zum Belichten von lichtempfindlichem Material nach dem Oberbegriff von Anspruch 1 bzw. Anspruch 17.

Derartige Vorrichtungen und Verfahren sind aus verschiedenen Anmeldungen, die sich mit fotografischen Kopiergeräten befassen, bekannt.

In der DE-OS 197 47 122 wird eine fotografische Druckvorrichtung mit einer analogen und einer digitalen Belichtungseinheit beschrieben, welche zum Belichten von Fotopapier entwickelt wurde. In diesem Gerät sind zwei Papiermagazine untergebracht, welche kontinuierliche Rollen von Druckpapier enthalten. Das Druckpapier wird aus den Magazinen gefördert, in Einzelblätter geschnitten und auf dem Belichtungstisch belichtet oder nach der Entnahme aus dem Magazin als Band an einem Zeilenbelichter entlanggefördert, dort belichtet und anschließend in Einzelblätter geschnitten. Die Papiermagazine sind beidseitig der Belichtungsbühne angeordnet, so daß wahlweise Papier aus dem einen Magazin oder Papier aus dem anderen Magazin entnommen werden kann. Die Magazine sind so ausgebildet, daß Papier unterschiedlicher Breite oder mit unterschiedlicher fotografischer Emulsion beschichtetes Papier verwendet werden kann. Dadurch ist gewährleistet, daß mit einem kontinuierlich arbeitenden Belichtungsgerät zwei unterschiedliche Papiersorten oder -breiten belichtet werden können.

Da es heutzutage jedoch üblich ist, fotografische Abzüge in vielen unterschiedlichen Formaten abzuziehen, reicht das Bereitstellen zweier unterschiedlicher Papierbreiten oftmals nicht aus, um in einem fortlaufend arbeitenden Gerät alle gewünschten Kopierformate erstellen zu können. Um Papier einer dritten Breite verwenden zu können, muß das beschriebene Gerät angehalten, die Kassetten müssen getauscht und der unterbrochene Kopiervorgang muß erneut aufgenommen werden.

Um eine derartige Unterbrechung des Kopiervorgangs beim Belichten unterschiedlicher Papiersorten oder - breiten zu vermeiden, wurde in der EP 0 570 651 A1 vorgeschlagen, ein Kopiergerät mit einem Vorratsspeicher zu versehen, der mehrere Papierkassetten umfaßt, welche aufgerolltes Papierband enthalten. Die Kassettenmäuler der verschiedenen Kassetten sind quer zur Transportrichtung des Kopiermaterials nebeneinander angeordnet. Eine Zuführeinrichtung mit einem quer zur Transportrichtung des Kopiermaterials verschiebbaren Schlitten transportiert das Kopiermaterial jeweils von einem Kassettenmaul zur Belichtungseinrichtung.

Eine derartige Papiermagazinanordnung, die aus mehreren Kassetten unterschiedlichen Papiermaterialbandes besteht, ist jedoch sehr groß und beansprucht zusammen mit der Zuführeinrichtung im Kopiergerät sehr viel Platz. Außerdem stellt die Zuführeinrichtung ein recht aufwendiges und teures Bauteil im Kopiergerät dar. Nachteilig ist auch der Zeitverlust beim Transportieren von Papier aus einer weiter entfernten Kassette zum Belichtungstisch.

Es war daher Aufgabe der Erfindung, eine Vorrichtung sowie ein Verfahren zum Belichten von lichtempfindlichem Material zu entwickeln, bei dem lichtempfindliches Material in möglichst vielen unterschiedlichen Formaten oder Sorten mit nur geringem Zusatzaufwand kontinuierlich zum Belichten bereitgestellt werden kann.

Gelöst wird diese Aufgabe gemäß der Erfindung durch eine Vorrichtung mit den Merkmalen von Anspruch 1 und ein Verfahren mit den Merkmalen von Anspruch 17.

Dadurch, daß in der Belichtungseinrichtung zusätzlich zum Rollenmagazin eine Blattkassette vorgesehen ist, in der lichtempfindliches Material eines anderen Formats oder anderer Oberfläche zur Belichtung zur Verfügung gestellt werden kann, ergibt sich die Möglichkeit, ein Bild auf Material eines weiteren Formats oder Erscheinungsbildes zu erzeugen, je nachdem, mit welchem Material die Blattkassette bestückt wird. Eine Blattkassette erhöht also ebenso wie ein zusätzliches Rollenmagazin die Variationsmöglichkeiten bezüglich der Papierauswahl, hat jedoch wesentlich weniger Platzbedarf und kann deshalb in direkter Nähe zur Belichtungsbühne angeordnet werden. Das Material aus der Kassette kann mit einer einfachen Übergabeeinrichtung direkt mit einer Transporteinrichtung auf die Belichtungsbühne oder auf die Transporteinrichtung, die das lichtempfindliche Material vom Rollenmagazin zur Belichtungsbühne transportiert, übergeben werden.

Da ausgefallenere Formate zwar zunehmend - im Vergleich zu den üblichen, vom Rollenmagazin bereitgestellten Formaten aber immer noch eher selten - gewünscht werden, ist es nicht notwendig, zur Belichtung dieser ausgefalleneren Formate eine weitere große Rolle lichtempfindlichen Materials in der Belichtungseinrichtung vorzusehen. Bei der relativ geringen Häufigkeit dieser ausgefalleneren Formate genügt es vollkommen, einen Stapel mit Blättern lichtempfindlichen Materials in der Belichtungseinrichtung unterzubringen, so daß die Belichtung dieser Formate im kontinuierlichen Betrieb des Kopiergeräts zwar einfach möglich ist, die Funktionalität des Geräts aber nicht durch ein überdimensioniertes Rollenmagazin beeinträchtigt ist. Eine Blattkassette mit Übergabeeinrichtung ist sehr einfach im Gerät unterzubringen und bedeutend unkomplizierter als ein Vorratsspeicher mit mehreren Kassettenrollen, der eine technisch sehr aufwendige Zuführeinrichtung voraussetzt.

Um bei der Materialauswahl noch flexibler zu werden, kann in der Belichtungseinrichtung noch eine weitere Kassette für blattförmiges, lichtempfindliches Material vorgesehen sein. Je nachdem, wieviel Platz im Gerät zur Verfügung steht, lassen sich auch drei oder mehr Blattkassetten mit unterschiedlichen Materialien unterbringen. Falls mehr als eine Kassette vorgesehen ist, ist es sinnvoll, die Übergabeeinrichtung so zu gestalten, daß sie zwischen den Kassetten bewegt werden kann, so daß mit einer beweglichen Übergabeeinrichtung lichtempfindliches Material aus jeder gewünschten Kassette entnehmbar und zum Belichtungstisch transportierbar ist.

Hier ist eine Anordnung, wie sie für ein Röntgenfilmblatt-Kassetten-Beladegerät in der DE-PS 36 10 660 beschrieben wird, einsetzbar. In diesem Gerät werden Röntgenfilmblätter mittels eines Saugers, der zwischen verschiedenen Röntgenfilmblatt-Kassetten verschoben werden kann, entnommen. Die Anordnung ist selbstverständlich auch für alle anderen Filmblätter verwendbar.

Derartige Übergabeeinrichtungen mit Saugern zum Übergeben von lichtempfindlichem Material aus einer Blattkassette zu einer Fördereinrichtung, die das lichtempfindliche Material zu einer Bilderzeugungseinrichtung transportiert, eignen sich auch zur Blattvereinzelung bei der Verwendung nur einer Blattkassette in der Belichtungseinrichtung. Ein Beispiel hierfür ist in der DE-PS 41 23 188 gegeben.

Die Übergabeeinrichtung kann auch mit Rollen zur Entnahme des blattförmigen Materials aus der Kassette ausgestattet sein. Ein Beispiel hierfür wird in der EP-PS 0 047 541 ausführlich beschrieben.

Falls die Blätter mittels Rollen entnommen werden, kann anstelle einer roboterartigen, beweglichen Übergabeeinrichtung ein Weichensystem verwendet werden, das die aus verschiedenen Kassetten entnommenen Blätter in einen gemeinsamen Transportweg einschleust.

Um die Entnahme einzelner Blätter aus der Kassette zu vereinfachen, kann auch ein Anhebearm am Boden der Blattkassette vorgesehen sein, der den Stapel blattförmigen Materials in der Kassette hochhebt, so daß das oberste Blatt am Entnahmeschlitz zu liegen kommt und einfach von der Übergabeeinrichtung erfaßt und aus der Kassette genommen werden kann. Ein Beispiel hierfür ist in der DE-PS 36 00 103 gegeben.

Die Blattkassette kann fest in das Gerät eingebaut und von außen mit einem Stapel lichtdichten Materials beladen werden. Sie kann aber auch durch eine Eingabeöffnung, wie z. B. einen Eingabeschlitz, in das Gerät eingesteckt werden. Falls die Kassette in einen Schlitz am Gerät einsteckbar ist, muß der Schlitz lichtdicht verschließbar sein. Vorteilhaft ist es, wenn der Schlitz so ausgebildet ist, daß Kassetten unterschiedlicher Größe eingebracht werden können. In diesem Fall ist es möglich, durch einfaches Wechseln von handlichen Blattkassetten verschiedene Formate und Materialoberflächen zur Belichtung von Bildern zur Verfügung zu stellen.

In einer Belichtungsvorrichtung können durch das Anbringen von zwei Rollenmagazinen und einer Kassette beispielsweise drei unterschiedliche Breiten lichtempfindlichen Materials zum Belichten zur Verfügung gestellt werden. Durch das Schneiden des Rollenmaterials in unterschiedlich lange Stücke läßt sich damit schon eine beträchtliche Anzahl von Formaten realisieren.

Das Bereitstellen eines Stapels blattförmigen lichtempfindlichen Materials zusätzlich zu den Materialrollen ist sowohl für herkömmliche Belichter, die ein Filmnegativ beleuchten und über eine Abbildungsoptik auf Fotopapier kopieren, als auch für digitale Belichtungseinrichtungen, die eingescannte Daten eines Bildes oder sonstige digitale Daten auf lichtempfindliches Material belichten, vorteilhaft. Als Belichtungseinheiten können bei einem digitalen Gerät Laserbelichter, pixelweise ansteuerbare Lichtmodulatoren, die von einer Lichtquelle beleuchtet werden, oder lichtemittierende, pixelweise ansteuerbare Lichtquellen wie LEDs verwendet werden.

Je nach Belichtungseinheit sind entweder Belichtungstisch oder Belichtungswalze zu verwenden, an die die Transporteinrichtungen für das lichtempfindliche Material anzupassen sind.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:

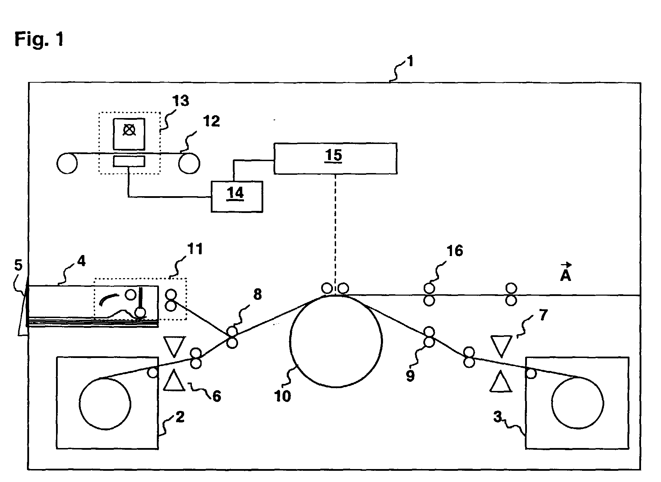

- Fig. 1: die schematische Darstellung einer erfindungsgemäßen Vorrichtung zum Belichten von lichtempfindlichen Material.

Figur 1 zeigt ein Ausführungsbeispiel einer digitalen Belichtungsvorrichtung 1, bei der zusätzlich zu den Rollenmagazinen 2 und 3 eine Blattkassette 4 zur Aufbewahrung von zu belichtendem Fotopapier vorgesehen ist. Die Blattkassette 4 kann zum Wechseln oder zum Auffüllen mit neuem Fotopapier durch den Eingabeschlitz 5 entnommen werden, der mittels einer lichtdichten Kappe verschließbar ist.

Das Fotopapier wird zur Belichtung entweder aus einem Rollenmagazin 2 oder 3 gefördert, von der Schneideeinrichtung 6 oder 7 in Einzelblätter geschnitten und von Transportwalzen 8 oder 9 zur Belichtungswalze 10 transportiert oder mittels einer Walzenanordnung zum Vereinzeln des obersten Blattes des Fotopapier-Blattstapels 11 aus der Blattkassette entnommen und über die Transportwalze 8 ebenfalls zur Belichtungswalze 10 transportiert. Auf der Belichtungswalze 10 werden digitale Daten, die z. B. durch Scannen eines fotografischen Films 12 an der Scaneinheit 13 gewonnen und am Bildverarbeitungsrechner 14 bearbeitet werden, von einem Laserbelichter 15 auf das Fotopapier aufbelichtet. Der Laserbelichter 15 weist im Ausführungsbeispiel drei verschiedenfarbige Gas- oder Halbleiterlaser auf, deren emittierte Lichtstrahlen in einem Strahlengang vereinigt, auf ein Spiegelpolygon geführt und über eine F-Theta-Linse auf das Fotopapier abgebildet werden.

Anstelle dieses Laserbelichters ist es auch möglich, verschiedenfarbige Laserdioden zu verwenden, die entlang des Fotopapiers bewegt werden, so daß ihr Licht über die gesamte Breite des Fotopapiers geführt wird.

Das belichtete Papier wird schließlich über eine weitere Transporteinheit 16 in Transportrichtung A zu einer nicht dargestellten Entwicklungseinheit transportiert, in der es in einem chemischen Verfahren entwickelt wird.

In den Rollenmagazinen 2 und 3 befinden sich jeweils unterschiedliche Fotopapiersorten, die - je nachdem, welches Rollenmagazin zur Papierentnahme verwendet wird - ausgewählt werden können. Es ist nicht notwendig, daß sich die Rollenmagazine beidseitig der Belichtungsbühne befinden. Ebensogut ist es vorstellbar, daß sich beide Magazine an einer Seite der Belichtungsbühne befinden, so daß das Papier von beiden Rollen entlang desselben Transportweges zur Belichtungsbühne gelangt. Zusätzlich zu diesem Rollenmagazin ist mindestens eine Blattkassette 4 vorgesehen, mittels der eine weitere Papiersorte zum Aufbelichten zur Verfügung gestellt werden kann. Diese Papiersorte wird in Form eines Einzelblattstapels entweder außerhalb des Gerätes in eine lichtdichte Kassette eingeführt, die anschließend in das Gerät geschoben wird, oder ein lichtdicht verschlossener Einzelblattstapel wird in eine im Gerät befindliche Blattkassette eingeführt und gleichzeitig beim Einführen mittels einer Öffnungseinrichtung geöffnet, so daß in der Blattkassette im Gerät ein loser Blattstapel zu liegen kommt. Von diesem Blattstapel wird mittels einer Vereinzelungseinheit das oberste Blatt abgehoben, so daß dieses aus der Kassette entnommen werden kann. Die zu belichtenden Einzelblätter, die entweder aus der Blattkassette kommen oder vom Rollenmaterial abgeschnitten wurden, werden nun entweder durch Walzen - wie im Ausführungsbeispiel dargestellt - oder durch Transportbänder oder sonstige Führungsmittel zu einer Belichtungsstation transportiert. Dort wird das Papier auf einem Belichtungstisch, einer Belichtungsbühne, einer Belichtungswalze oder einer anderen Halterung belichtet. Die Belichtung erfolgt mit einer digitalen Belichtungseinheit, wie einem Laserbelichter, einer Lichtquelle, deren Licht mit einem Lichtmodulator moduliert wird, oder einer selbstleuchtenden, pixelweise modulierbaren Lichtquelle, wie beispielsweise einem LED-Array. Bei einer großflächigen Belichtungseinheit wie einer Beleuchtungseinrichtung mit einem LCD oder DMD ist es sinnvoll, das Papier auf eine Belichtungsbühne zu legen, so daß es großflächig belichtet wird. Bei einem Laserbelichter oder anderen Zeilenbelichter ist es vorteilhafter, beispielsweise eine Belichtungswalze zu verwenden, auf der das Papier gleichmäßig von Zeile zu Zeile bewegt werden kann, so daß immer eine Zeile nach der anderen belichtet wird.

## Patentansprüche

1. Vorrichtung zum Belichten von lichtempfindlichem Material mit einer Belichtungseinrichtung, einer Belichtungsbühne, wenigstens einem Magazin zum Aufbewahren einer Rolle lichtempfindlichen Materials, einer Transporteinrichtung zum Transportieren des lichtempfindlichen Materials aus dem Magazin zur Belichtungsbühne und einer Schneideinrichtung zum Schneiden des lichtempfindlichen Materials in Einzelblätter, **dadurch gekennzeichnet,** daß eine Kassette zum Aufbewahren von blattförmigem lichtempfindlichem Material vorgesehen ist, sowie eine Übergabeeinrichtung zum Übergeben des blattförmigen Materials aus der Kassette zur Transporteinrichtung oder direkt zur Belichtungsbühne.

2. Vorrichtung nach Anspruch 1, dadurch gekennzeichnet, daß eine weitere Kassette für blattförmiges lichtempfindliches Material vorgesehen ist.

3. Vorrichtung nach Anspruch 2, dadurch gekennzeichnet, daß die Übergabeeinrichtung zwischen den Kassetten bewegbar ist.

4. Vorrichtung nach Anspruch 1, dadurch gekennzeichnet, daß die Übergabeeinrichtung Sauger zur Entnahme des blattformigen Materials aus der Kassette aufweist.

5. Vorrichtung nach Anspruch 1, dadurch gekennzeichnet, daß blattergreifende Rollen zur Entnahme des blattförmigen Materials aus der Kassette vorgesehen sind.

6. Vorrichtung nach Anspruch 1, dadurch gekennzeichnet, daß eine Andrückarm zum Anheben des Stapels blattförmigen Materials in der Kassette vorgesehen ist.

7. Vorrichtung nach Anspruch 1, dadurch gekennzeichnet, daß ein Eingabeschlitz vorgesehen ist, in den Kassetten zum Aufbewahren von blattförmigem lichtempfindlichem Material eingegeben werden können.

8. Vorrichtung nach Anspruch 7, dadurch gekennzeichnet, daß der Eingabeschlitz bei eingegebener Kassette lichtdicht abschließbar ist.

9. Vorrichtung nach Anspruch 1, dadurch gekennzeichnet, daß das blattförmige lichtempfindliche Material in der Kassette eine andere Breite hat als die Materialrolle in dem Magazin.

10. Vorrichtung nach Anspruch 1, dadurch gekennzeichnet, daß mindestens ein weiteres Magazin für eine weitere Rolle lichtempfindlichen Materials vorgesehen ist.

11. Vorrichtung nach Anspruch 10, dadurch gekennzeichnet, daß das lichtempfindliche Material aus dem weiteren Magazin mittels einer zusätzlichen Transporteinrichtung auf die Belichtungsbühne transportiert wird.

12. Vorrichtung nach Anspruch 11, dadurch gekennzeichnet, daß die beiden Magazine so ausgebildet sind, daß sie Rollen lichtempfindlichen Materials mit unterschiedlichen Breiten aufnehmen können.

13. Vorrichtung nach Anspruch 1, dadurch gekennzeichnet, daß die Belichtungseinrichtung eine pixelweise ansteuerbare Belichtungseinheit aufweist, die entsprechend digitaler Bilddaten ansteuerbar ist.

14. Vorrichtung nach Anspruch 13, dadurch gekennzeichnet, daß die Belichtungseinheit ein Laserbelichter ist.

15. Vorrichtung nach Anspruch 13, dadurch gekennzeichnet, daß die Belichtungseinheit einen pixelweise ansteuerbaren Lichtmodulator aufweist, der von einer Beleuchtungseinheit beleuchtet wird.

16. Vorrichtung nach Anspruch 1, dadurch gekennzeichnet, daß die Belichtungseinrichtung eine Beleuchtungseinheit zum Beleuchten eines zu kopierenden Filmes aufweist, sowie eine Optik, zum Abbilden des Filmes auf das lichtempfindliche Material.

17. Verfahren zum Belichten von lichtempfindlichem Material, wobei ein Einzelblatt von einem in einem Magazin aufbewahrten Materialband abgeschnitten und zu einer Belichtungsbühne transportiert wird, dadurch gekennzeichnet, daß ein weiteres Einzelblatt lichtempfindlichen Materials aus einem Vorratsbehälter entnommen und zur Belichtungsbühne transportiert wird.
